# EUROPÄISCHE PATENTSCHRIFT

(11) **EP 4 107 036 B1**
(45) Veröffentlichungstag und Bekanntmachung des Hinweises auf die Patenterteilung: **11.03.2026**
(21) Anmeldenummer: 21702372.0
(22) Anmeldetag: 15.01.2021
(51) Int. Cl.: B60R 13/08, F16B 5/06, B60R 13/02, F16B 19/00, F16B 21/08, F16B 19/10

(54) **VORRICHTUNG ZUR BEFESTIGUNG EINES FAHRZEUGBAUTEILS IN UND/ODER AN EINEM FAHRZEUG**
DEVICE FOR SECURING A VEHICLE COMPONENT IN AND/OR ON A VEHICLE
DISPOSITIF DE FIXATION D'UN COMPOSANT DE VÉHICULE DANS ET/OU SUR UN VÉHICULE

(30) Priorität: 20.02.2020 DE 102020104489
(43) Veröffentlichungstag der Anmeldung: 28.12.2022
(73) Patentinhaber: Adler Pelzer Holding GmbH, 58099 Hagen (DE)
(72) Erfinder: RIEDERER, Frank, 58455 Witten (DE); KARCZ, Thomas, 44369 Dortmund (DE); SCHULZE, Volkmar, 84069 Schierling (DE); RIEDIßER, Wolfgang, 71272 Renningen (DE); BÄUERLE, Tobias, 71546 Aspach (DE)
(74) Vertreter: Hannke Bittner & Partner mbB Regensburg
(86) Internationale Anmeldenummer: PCT/EP2021/050876
(87) Internationale Veröffentlichungsnummer: WO 2021/164962

(56) Entgegenhaltungen:
- EP-A1- 1 550 818
- DE-A1- 102018 218 744
- GB-A- 2 005 191
- US-B2- 7 614 836

## Beschreibung

Die Erfindung betrifft eine Vorrichtung zur Befestigung eines Fahrzeugbauteils in und/oder an einem Fahrzeug.

Kraftfahrzeuge werden mit Schallisolationselementen versehen, um potentielle, ins Innere des Fahrzeugs gelangende Geräusche zu dämpfen. Bei solchen Schallisolationselementen handelt es sich beispielsweise um eine Stirnwandverkleidung oder eine Bodenverkleidung, die in der Fahrzeugkarosserie angeordnet bzw. angebracht wird. Weitere Beispiele für Schallisolationselemente sind Kapselungen für z.B. Motoren, Verdichter o.dgl. Geräusche erzeugende Fahrzeugkomponenten.

Mitunter ist es erforderlich, weitere Fahrzeugbauteile an derartigen Schallisolationselementen zu befestigen, und zwar entweder dauerhaft oder temporär. Letzteres kann insbesondere bei der Montage eines Fahrzeugs erforderlich sein, wenn beispielsweise ein Fahrzeugbauteil an einem Schallisolationselement vormontiert ist, um dann im Einbauzustand des Fahrzeugbauteils von diesem abgenommen werden zu können, um es an einer anderen Stelle des Fahrzeugs zu platzieren.

Die EP1550818A1 offenbart eine Vorrichtung zur Befestigung eines Fahrzeugbauteils mit einem Schallisolationselement, nach dem Stand der Technik.

Aufgabe der Erfindung ist es, eine verbesserte Vorrichtung zur Befestigung eines Fahrzeugbauteils in und/oder an einem Fahrzeug zu schaffen.

Zur Lösung dieser Aufgabe wird mit der Erfindung eine Vorrichtung zur Befestigung eines Fahrzeugbauteils in und/oder an einem Fahrzeug vorgeschlagen, die versehen ist mit
- einem Schallisolationselement wie z.B. einer Stirnwandverkleidung, einer Bodenverkleidung, einer Gepäckraumverkleidung oder einer Motor- oder Aggregate-Kapselung oder einer Radhausverkleidung,
- wobei das Schallisolationselement eine Kunststoffmaterial aufweisende Trägerschicht mit einer ersten Seite und einer dieser abgewandten zweiten Seite und eine an die zweite Seite der Trägerschicht angeformte Schalldämpfungsschicht aus ebenfalls einem Kunststoffmaterial oder aus Synthetikfaser- oder Naturfasermaterial aufweist,
- wobei in der Trägerschicht eine Verankerungsvertiefung ausgebildet ist, die in der ersten Seite der Trägerschicht eine Einstecköffnung aufweist, an die sich ein von dem Kunststoffmaterial der Trägerschicht begrenzter Aufnahmeraum anschließt, der durch eine geschlossene Umfangsinnenseite und eine geschlossene Bodenfläche definiert ist, und
- einem Verankerungselement zur Aufnahme in der Verankerungsvertiefung,
- wobei das Verankerungselement
   - einteilig mit einem an dem Schallisolationselement zu befestigenden Bauteil ausgeführt ist oder
   - einteilig mit einem Halteelement ausgeführt ist, an dem das an dem Schallisolationselement zu befestigende Bauteil anbringbar ist, oder
   - durch eine Durchgangsöffnung, die in dem an dem Schallisolationselement zu befestigenden Bauteil ausgebildet ist, hindurch führbar ist,
- wobei die Verankerungsvertiefung einen an der Umfangsinnenseite ausgebildete, den Aufnahmeraum zumindest partiell verengenden Verengungsbereich mit einem sich in Richtung auf die Bodenfläche hin anschließenden aufgeweiteten Aufweitungsbereich aufweist und
- wobei das Verankerungselement eine Verankerungsschulter zum Hintergreifen des Verengungsbereichs bei von der Verankerungsvertiefung aufgenommenem Verankerungselement aufweist.

Die erfindungsgemäße Befestigungsvorrichtung für Fahrzeugbauteile dient der Befestigung derartiger Bauteile an einem Schallisolationselement, das seinerseits im Regelfall an der Fahrzeugkarosserie angebracht ist. Das Schallisolationselement weist in bekannter Weise ein Masse-Feder-System auf und umfasst eine auch als Schwer- bzw. Masseschicht bezeichnete Trägerschicht aus einem Kunststoffmaterial, an dessen eine Seite eine Schalldämpfungsschicht aus einem schalldämpfenden Kunststoffmaterial wie beispielsweise PU-Schaum angeformt ist. Alternativ kann die Schalldämpfungsschicht Synthetikfaser- oder Naturfasermaterial aufweisen. In der Trägerschicht ist eine Verankerungsvertiefung ausgebildet, die nach Art eines tiefgezogenen Napfes ausgeformt ist. Die Verankerungsvertiefung weist in der Schalldämpfungsschicht abgewandten ersten Seite der Trägerschicht eine Einstecköffnung auf, an die sich ein von dem Kunststoffmaterial der Trägerschicht begrenzter Aufnahmeraum anschließt, der durch eine geschlossene Umfangsinnenseite und eine geschlossene Bodenfläche definiert ist. Die Mantel- und Bodenwand der Vertiefung ist also geschlossen und besteht aus dem Kunststoffmaterial der Trägerschicht. Mit anderen Worten ist die Verankerungsvertiefung nach Art einer Sicke ausgebildet.

Bei einer bevorzugten Ausführungsform weist die Verankerungsvertiefung wenigstens abschnittsweise ein zylinderförmiges Profil auf. Bei einer weiteren bevorzugten Ausführungsform weist die Verankerungsvertiefung eine Tiefe auf, die zwischen 4mm und 50mm, bevorzugt zwischen 7mm und 40mm und besonders bevorzugt zwischen 10mm und 30mm liegt Bei einer weiteren vorteilhaften Ausführungsform weist die Verankerungsvertiefung einen Durchmesser auch, der zwischen 2mm und 40mm, bevorzugt zwischen 4mm und 30mm und besonders bevorzugt zwischen 6mm und 20mm liegt.

Der Vorteil der erfindungsgemäßen vorgeschlagenen Ausbildung der Verankerungsvertiefung mit geschlossener Mantel- oder Umfangswand und Bodenwand, also sozusagen als Sackloch, in der Trägerschicht ist akustischer Art, nämlich schalldämpfend; denn dadurch weist das Schallisolationselement keinerlei Durchgangsöffnungen auf.

Zur erfindungsgemäßen Befestigungsvorrichtung gehört überdies ein Verankerungselement zur Aufnahme in der Verankerungsvertiefung (bzw. welches in der Verankerungsvertiefung aufnehmbar ist). Dieses Verankerungselement kann einteilig mit dem Fahrzeugbauteil ausgeführt sein, das an dem Schallisolationselement zu befestigen ist. Alternativ kann das Verankerungselement aber auch einteilig mit einem Halteelement ausgeführt sein, an dem wiederum das zu befestigende Bauteil anbringbar ist. Schließlich ist es aber auch möglich, dass das zu befestigende Bauteil eine Durchgangsöffnung aufweist, durch die hindurch das Verankerungselement führbar ist, womit dann das Bauteil bei von der Verankerungsvertiefung aufgenommenem Verankerungselement an dem Schallisolationselement fixiert ist.

Bekannt sind Verankerungselemente mit mehreren widerhakenähnlichen Verhakungsstrukturen, die beispielsweise in Form von flexiblen Lamellen einen Schaft des Verankerungselements umgeben. Bevorzugt weist das Verankerungselement an seinem Außenumfang widerhakenähnliche Strukturen auf. Diese widerhakenähnlichen Strukturen und/oder Vorsprünge können dabei verformbar und/oder elastisch an einem Grundkörper des Verankerungselements angeordnet sein.

Erfindungsgemäß weist die Verankerungsvertiefung einen den Aufnahmeraum partiell oder allseitig verengenden Verengungsbereich auf, der an der Umfangsinnenseite vorzugsweise nahe der Einstecköffnung ausgebildet ist. Zur Bodenfläche hin schließt sich an den Verengungsbereich ein aufgeweiteter Aufweitungsbereich an. Auf diese Art und Weise entsteht ein Hinterschnitt innerhalb des Aufnahmeraums, der bei von der Verankerungsvertiefung aufgenommenem Verankerungselement von einer an dieser ausgebildeten Verankerungsschulter hintergriffen wird.

Durch das Zusammenwirken von Verankerungsschulter des Verankerungselements mit dem Übergang von Verengungs- zu Aufweitungsbereich der Verankerungsvertiefung ist nun eine zuverlässige Sicherung des Verankerungselements gegen ein unbeabsichtigtes Herauslösen aus der Verankerungsvertiefung gegeben. Der Verengungsbereich erstreckt sich allseitig oder partiell längs der Umfangsinnenseite. Der Verengungsbereich ist beispielsweise als ein durchgehender oder unterbrochener Innenwulst ausgebildet, der von der Innenumfangsseite des Aufnahmeraums der Verankerungsvertiefung nach innen vorsteht.

Alternativ kann die Umfangsinnenseite des Aufnahmeraums auch eine Vertiefung aufweisen, die dann den Aufweitungsbereich bildet, wobei sich bevorzugt zwischen der Einstecköffnung und dieser Vertiefung der Verengungsbereich befindet. Der Aufweitungsbereich kann sich ggf. auch bis zur Bodenfläche erstrecken, was aber nicht zwingend erforderlich ist.

Je nachdem, welches Fahrzeugbauteil mit der erfindungsgemäßen Vorrichtung befestigt werden soll, kann es von Vorteil sein, für eine Montagehilfe zu sorgen, die dann im Einbauzustand auch noch eine weitere Funktion übernehmen kann. Bei einer diesbezüglich bevorzugten Ausgestaltung der Erfindung ist sozusagen als Positionierhilfe alternativ oder kummulativ vorgesehen,

- dass in der Trägerschicht des Schallisolationselements eine Positioniervertiefung ausgebildet ist, die in der ersten Seite der Trägerschicht eine Einstecköffnung aufweist, an die sich ein von dem Kunststoffmaterial der Trägerschicht begrenzter Aufnahmeraum anschließt, der durch eine geschlossene Umfangsinnenseite und eine geschlossene Bodenfläche definiert ist,
- dass ein Positionierelement vorgesehen ist, das einteilig mit dem an dem Schallisolationselement zu befestigenden Bauteil oder einteilig an einem Halteelement ausgeführt ist, an dem das an dem Schallisolationselement zu befestigende Bauteil anbringbar ist, und/oder
- dass das Positionierelement und das Verankerungselement bei mit der Positioniervertiefung bzw. der Verankerungsvertiefung fluchtender Ausrichtung in ihre ihnen jeweils zugeordneten Vertiefungen einsteckbar und/oder einsetzbar sind.

Zusätzlich zu dem Verankerungselement weist die erfindungsgemäße Vorrichtung gemäß dieser Ausgestaltung auch noch ein Positionierelement, dem seitens des Schallisolationselements eine Positioniervertiefung zugeordnet ist, auf. Diese Positioniervertiefung ist wiederum in der Trägerschicht des Schallisolationselements ausgebildet, und zwar bevorzugt in gleicher Weise wie die Aufnahmevertiefung als sozusagen Sicke bzw. tiefgezogener Napf. Die Positioniervertiefung erfordert keinerlei spezielle Ausgestaltungen an der Umfangsinnenseite ihres Aufnahmeraums. Demgemäß ist also auch die Positioniervertiefung als an ihrer Mantelfläche und ihrer Bodenfläche geschlossene Struktur ausgebildet. Die Einstecköffnung befindet sich wiederum in der Seite der Trägerschicht, die der Schalldämpfungsschicht gegenüberliegt. Somit ist auch die Positioniervertiefung als Sackloch ausgebildet, was, wie bereits oben im Zusammenhang mit der Verankerungsvertiefung beschrieben, akustisch von Vorteil ist.

Bevorzugt weisen die Verankerungsvertiefung und die Positioniervertiefung ähnliche Tiefen auf, insbesondere Tiefen, die um nicht mehr als 20%, bevorzugt um nicht mehr als 10% voneinander abweichen. Bei einer weiteren bevorzugten Ausführungsform weist die Positioniervertiefung einen geringeren Querschnitt auf als die Verankerungsvertiefung.

Bei einer bevorzugten Ausführungsform weist die Verankerungsvertiefung eine Tiefe auf, die derart gewählt ist, dass das Verankerungselement in einem montierten Zustand nicht bis an den Grund der Verankerungsvertiefung reicht. So ist es beispielsweise möglich, dass die Verankerungsvertiefung etwas tiefer, bevorzugt zwischen 1mm und 5mm, bevorzugt zwischen 1mm und 3mm und bevorzugt ca. 2mm tiefer ist als das Verankerungselement reicht. Dadurch kann der Werker den Clip und die Widerhaken ein wenig vorspannen. Wenn die Montagekraft abnimmt, federt der Clip leicht zurück und sitzt dann sicher. Auf diese Weise kann ein Einrasten sichergestellt werden.

Bei einer weiteren bevorzugten Ausführungsform weist das Positionierelement an seinem Außenumfang wenigstens eine und bevorzugt mehrere sich in der Längsrichtung des Positionierelements erstreckende Nuten auf.

Durch die Positioniervertiefung ist eine Montage sichergestellt, dass das anzubringende Fahrzeugbauteil in vorschriftsmäßiger Ausrichtung befestigt wird. Um eine Fehlpositionierung des zu befestigenden Bauteils zu verhindern, kann zumindest eine der beiden Vertiefungen (also entweder die Positioniervertiefung oder die Verankerungsvertiefung) mechanisch kodiert sein, so dass sich das Positionierelement ausschließlich in die Positioniervertiefung und/oder das Verankerungselement ausschließlich in die Verankerungsvertiefung einsetzen lässt. Das Zusammenspiel aus Positionierelement und Positioniervertiefung sorgt neben der Montagehilfe und der Unterstützung der vorschriftsmäßigen Ausrichtung des Fahrzeugbauteils bei der Montage auch noch dafür, dass das Bauteil im montierten Zustand gegen Verdrehungen gesichert ist.

In vorteilhafter Ausgestaltung der Erfindung kann die mechanische Kodierung bzw. die unterschiedliche mechanische Kodierung beispielsweise dadurch realisiert werden, dass das Verankerungselement und die Verankerungsvertiefung einen untereinander gleichen zylindrischen ersten Querschnitt aufweisen, dass das Positionierelement und die Positioniervertiefung einen untereinander gleichen zylindrischen zweiten Querschnitt aufweisen und dass die Größe des ersten Querschnitts verschieden ist von der Größe des zweiten Querschnitts. Alternativ kann die mechanische Codierung auch dadurch realisiert sein, dass das Verankerungselement und die Verankerungsvertiefung eine untereinander gleiche erste Querschnittsfläche aufweisen, dass das Positionierelement und die Positioniervertiefung eine untereinander gleiche zweite Querschnittsfläche aufweisen und dass die zweite Querschnittsfläche verschieden ist von der ersten Querschnittsfläche oder dass die zweite Querschnittsfläche gleich der ersten Querschnittsfläche und verdreht zur zweiten Querschnittsfläche ausgerichtet ist.

In weiterer vorteilhafter Ausgestaltung der Erfindung kann vorgesehen sein, dass die Einstecköffnung der Verankerungsvertiefung einen Öffnungsrand aufweist und dass das Verankerungselement einen Umfangsflansch mit einem Umfangsrandbereich aufweist, der den Rand der Einstecköffnung der Verriegelungsvertiefung überragt und somit die Einstecköffnung der Verriegelungsvertiefung im Zustand des von diesem aufgenommenen Verriegelungselements abdeckt.

In ähnlicher Ausgestaltung kann bei einem anderen vorteilhaften Ausführungsbeispiel der Erfindung vorgesehen sein, dass die Einstecköffnung der Positioniervertiefung einen Öffnungsrand aufweist und dass das Positionierelement einen Umfangsflansch mit einem Umfangsrandbereich aufweist, der den Rand der Einstecköffnung der Positionsvertiefung überragt und somit die Einstecköffnung der Positionsvertiefung im Zustand des von diesem aufgenommenen Positionselements abdeckt.

Die erfindungsgemäße Befestigungsvorrichtung kann nicht nur an Schallisolationselementen der vorstehend genannten Art ausgebildet sein. Alternativ ist vorgesehen, dass die Schallisolationsschicht ausschließlich aus der Trägerschicht als sogenannte Masse-Schicht besteht, also keine Schalldämpfungsschicht aufweist. Es ist darüber hinaus auch möglich, dass die Trägerschicht eines für die Erfindung verwendbaren Schallisolationselements sowohl eine Schalldämpfungsschicht als auch beispielsweise einen Teppichboden aufweist; in dieser Ausgestaltung befindet sich die Trägerschicht also zwischen den beiden anderen zuvor genannten Schichten. Je nach Applikation kann entweder die Schalldämpfungsschicht oder die Trägerschicht an der Karosserie des Fahrzeugs anliegen.

Bei einer weiteren Ausführungsform ist das Halteelement, insbesondere an der den Vertiefungen zugewandten Oberfläche im Wesentlichen eben ausgebildet.

Bei einer weiteren vorteilhaften Ausführungsform ist das Halteelement in einer in der Trägerschicht ausgebildeten Mulde positionierbar. Diese Mulde kann dabei beispielsweise ein im Wesentlichen rechteckiges Profil aufweisen insbesondere ein rechteckiges Profil mit abgerundeten Ecken. Bei einer weiteren bevorzugten Ausführungsform weist die Mulde eine Tiefe auf, die geringer ist als eine Tiefe der Verankerungsvertiefung. Bei einer weiteren bevorzugten Ausführungsform ist das Halteelement derart in der Mulde positionierbar, dass das Halteelement von einem Boden dieser Mulde beabstandet ist. Es wäre jedoch auch möglich, dass ein Boden der Mulde und das Halteelement wenigstens abschnittsweise aneinander anliegen.

Die vorliegende Erfindung ist weiterhin auf ein Kraftfahrzeug und insbesondere ein Straßenkraftfahrzeug mit einer Vorrichtung der oben beschriebenen Art gerichtet.

Die Erfindung wird nachfolgend anhand mehrerer Ausführungsbeispiele und unter Bezugnahme auf die Zeichnungen näher erläutert. Im Einzelnen zeigen dabei:
- Fig. 1: eine Draufsicht auf die Trägerschicht eines Schallisolationselements mit perspektivisch gezeigtem Bauteil-Halteelement, das in diesem Fall in eine Vertiefung innerhalb der Trägerschicht des Schallisolationselements positionierbar ist,
- Fig. 2: eine perspektivische Ansicht auf die Unterseite des Halteelements mit einem Verankerungselement und einem Positionierelement,
- Fig. 3: eine Schnittansicht durch die Anordnung aus Schallisolationselement und an diesem befestigten Halteelement für ein Fahrzeugbauteil,
- Fig. 4: eine Variante der erfindungsgemäßen Befestigungsvorrichtung, bei der als Verankerungselement ein Spreizdübel-Konzept verwendet wird,
- Fig. 5: eine weitere Variante der erfindungsgemäßen Befestigungsvorrichtung mit einem bis in die Ebene der Einstecköffnung der Verankerungsvertiefung reichendem Verengungsbereich und
- Fig. 6: eine weitere Variante der erfindungsgemäßen Befestigungsvorrichtung, bei der das Verankerungselement direkt einteilig mit dem zu befestigenden Bauteil verbunden ist.

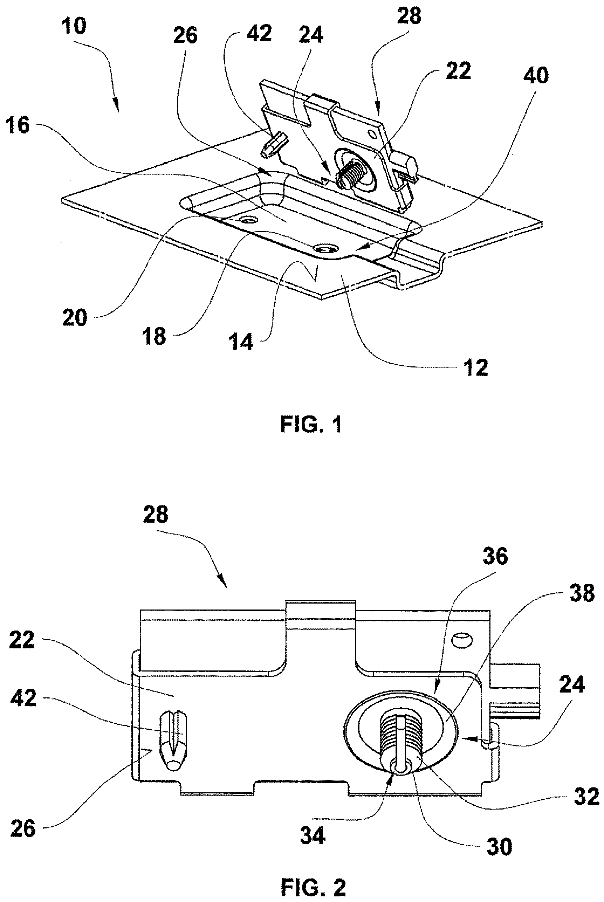

In Fig. 1 ist in Draufsicht ein Schallisolationselement 10 gezeigt, das eine Trägerschicht 12 aus Kunststoffmaterial aufweist. Das Kunststoffmaterial der Trägerschicht 12 kann beispielsweise eine Shore-A-Härte im Bereich von 66 bis 90 und insbesondere im Bereich von 70 bis 85 aufweisen. Als Kunststoffmaterial der Trägerschicht 12 eignet sich beispielsweise EVA/PE, PE, PP, EPDM, TPE oder TPO.

Bezogen auf die Darstellung in Fig. 1 befindet sich hinter der Trägerschicht 12 eine Schalldämpfungsschicht 13 aus einem vorzugsweise geschäumten Schalldämpfungsmaterial, bei dem es sich beispielsweise um einen PU-Schaum handeln kann. Diese Schalldämpfungsschicht befindet sich also auf derjenigen Seite der Trägerschicht 12, die der in Fig. 1 gezeigten ersten Seite 14 der Trägerschicht 12 abgewandt ist.

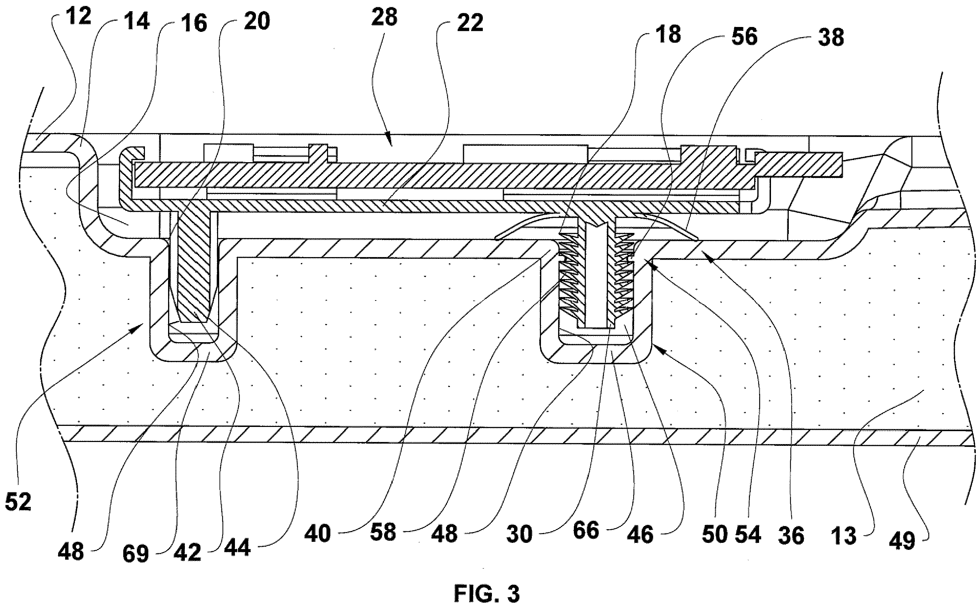

In einer Mulde 16 der Trägerschicht 12 befinden sich, wie in Fig. 1 zu erkennen ist, zwei Einstecköffnungen 18, 20, von denen die eine Einstecköffnung 18 zu einer Verankerungsvertiefung 50 (siehe Fig. 3) gehört, während die andere Einstecköffnung 20 den Zugang zu einer Positioniervertiefung 52 (siehe ebenfalls Fig. 3) ermöglicht.

In entsprechender Weise ist ein in der Mulde 16 unterbringbares Halteelement 22 mit einem abstehenden Verankerungselement 24 und einem ebenfalls abstehenden Positionierelement 26 ausgebildet. An dem Halteelement 22 befindet sich ein Fahrzeugbauteil 28, bei dem es sich um eine kleinere Bauteileinheit handeln kann.

Die Ausgestaltung des Verankerungselements 24 und des Positionierelements 26 ist deutlicher anhand von Fig. 2 zu erkennen. Das Verankerungselement 24 weist einen in diesem Ausführungsbeispiel hohlen, geschlitzten Schaft 30 auf, von dem als Widerhaken ausgerichtete Verankerungsvorsprünge bzw.- Lamellen 32 umlaufend abstehen. An seinem dem freien Ende 34 abgewandten anderen Ende des Schafts 30 befindet sich ein vorzugsweise flexibler Umfangsflansch 36, der mit seinem Umfangsrandbereich 38 den Öffnungsrand 40 der Einstecköffnung 18 überdeckt.

Das Positionierelement 26 ist ebenfalls stiftförmig ausgebildet und weist einen beispielsweise im Querschnitt eine Kreuzstruktur aufweisenden Schaft 42 auf.

Die Einstecköffnungen 18, 20 sind hinsichtlich ihrer Querschnittsflächen unterschiedlich ausgebildet bzw. bemaßt, so dass sich das Haltelement 22 ausschließlich in der in Fig. 1 gezeigten Ausrichtung an dem Schallisolationselement 10 befestigen und montieren lässt.

In Fig. 3 ist die Befestigungssituation im Querschnitt gezeigt. Das Schallisolationselement 10 weist die Schwer- bzw. Trägerschicht 12 auf, in deren erster Seite 14 die Einstecköffnungen 18, 20 ausgebildet sind. An beide Einstecköffnungen 18, 20 schließen sich allseitig, das heißt, sowohl umfangsseitig als auch bodenseitig geschlossene Aufnahmeräume 44, 46 an, deren Umfangsinnenseiten 48 von dem Material der Trägerschicht 12 gebildet sind. Die Verankerungsvertiefung 50 und die Positioniervertiefung 52, die sich an die jeweilige Einstecköffnung 18 bzw. 20 anschließen, sind wie Näpfe, bzw. Hütchen in der Trägerschicht 12 ausgebildet. Das Schallisolationselement 10 liegt an der Fahrzeugkarosserie 49 an, wie in Fig. 3 angedeutet ist.

Wie anhand von Fig. 3 zu erkennen ist, weist der Aufnahmeraum 46 der Verankerungsvertiefung 50 einen Verengungsbereich 54 auf, der allseitig oder partiell und umlaufend an der Umfangsinnenseite 48 des Aufnahmeraums 46 ausgebildet ist. In diesem Ausführungsbeispiel ist der Verengungsbereich 54 als nach innen in den Aufnahmeraum 46 vorstehende Wulst 56 ausgebildet. Eine derartige Struktur eines Aufnahmeraums 46 mit sozusagen Hinterschnitt lässt sich spritzgusstechnisch durch Zwangsentformung oder durch mit einem Faltkern versehene Spritzgussformen herstellen. An dem Verengungsbereich 54 schließt sich zur Bodenfläche 66 des Aufnahmeraums 46 hin ein Aufweitungsbereich 68 an.

Die Positionsvertiefung 52 ist an ihrer Bodenfläche 69 und an ihrer Umfangsseite ebenfalls geschlossen. Beide Vertiefungen, also die Verankerungsvertiefung 50 und die Positioniervertiefung 52, sind also als Sacklöcher ausgebildet.

Für das Zusammenwirken des Verankerungselements 24 mit der Verankerungsvertiefung 50 dient eine Verankerungsschulter 58, die an dem Schaft 30 des Verankerungselements 24 ausgebildet ist und radial von diesem absteht sowie (im Einbauzustand) zur Einstecköffnung 18 weist. Diese Verankerungsschulter 58 kann als die dem Umfangsflansch 36 nächstliegende Lamelle ausgebildet sein. Dies ist aber nicht zwingend erforderlich.

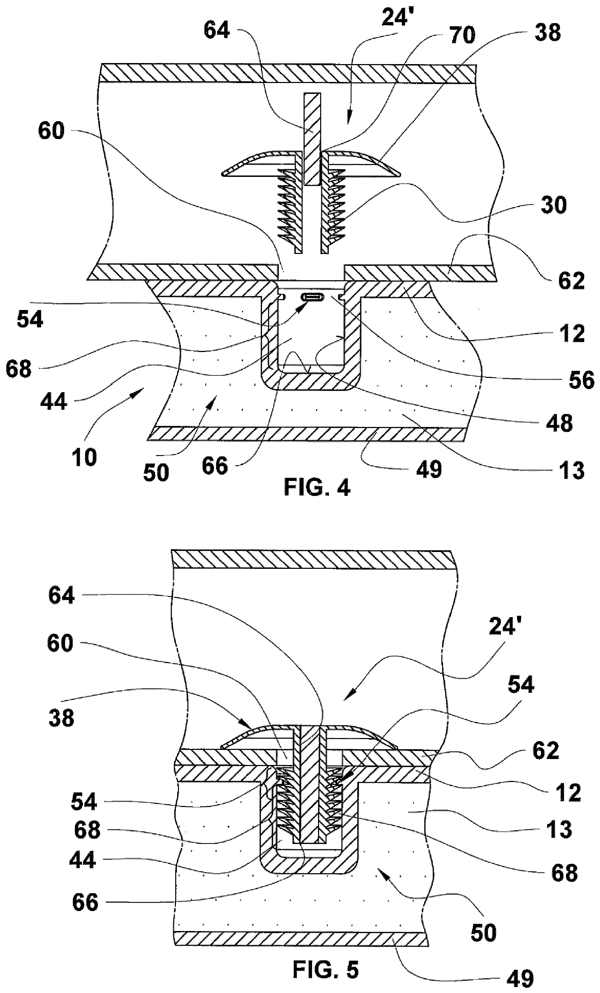

In Fig. 4 ist eine alternative Ausgestaltung der erfindungsgemäßen Befestigungsvorrichtung gezeigt. Sofern, die in Fig. 4 gezeigten Elemente der Befestigungsvorrichtung mit denjenigen gemäß Fig. 3 funktions- bzw. konstruktionsfähig sind, sind sie in Fig. 4 mit den gleichen Bezugszeichen versehen wie in Fig. 3.

Bei dem Ausführungsbeispiel der Befestigungsvorrichtung der Fig. 4 existiert lediglich ein Verankerungselement 24' ohne dazugehörendes Positionierelement 26. Mehrere derartige einzelne Verankerungselemente 24' können verwendet werden. Bei dem Bauteil, das an dem Schallisolationselement 10 befestigt werden soll, handelt es sich beispielsweise um einen Kabel- oder Lüftungskanal. Dieser weist eine Durchgangsöffnung 60 in seiner Kanalwand 62 auf, durch die hindurch das Verankerungselement 24' führbar und in die mit der Durchgangsöffnung 60 fluchtende Verankerungsvertiefung 50 in dem Schallisolationselement 10 einsteckbar ist. In diesem Ausführungsbeispiel kann das Verankerungselement 24' grundsätzlich so konstruiert sein, wie das Verankerungselement 24 der Befestigungsvorrichtung nach den Fign. 1 bis 3. Der Unterschied besteht darin, dass das Verankerungselement 24' nicht einteilig mit einem weiteren Element (in den Fign. 1 bis 3 ist dies das Halteelement 22) ausgebildet ist.

Zusätzlich ist in Fig. 4 die Variante gezeigt, dass das Verankerungselement 24' als Spreizdübel ausgebildet ist. Zu erkennen ist ein Kernstift 64, der durch den eine Durchgangsöffnung 70 aufweisenden Umfangsflansch 28 (verbreiteter Kopf des Verankerungselements 24') hindurch in den Schaft 30 einführbar ist.

In Fig. 5 ist eine Variante der Ausgestaltung nach der Befestigungsvorrichtung nach Fig. 4 gezeigt, indem der Verengungsbereich 54 hinsichtlich seiner axialen Tiefenerstreckung verlängert ist. Wie in den Fign. 1 bis 4 schließt sich an den Verengungsbereich 54 zur Bodenfläche 66 der Verankerungsvertiefung 50 hin ein Aufweitungsbereich 68 an (siehe insbesondere die Fign. 3 und 4).

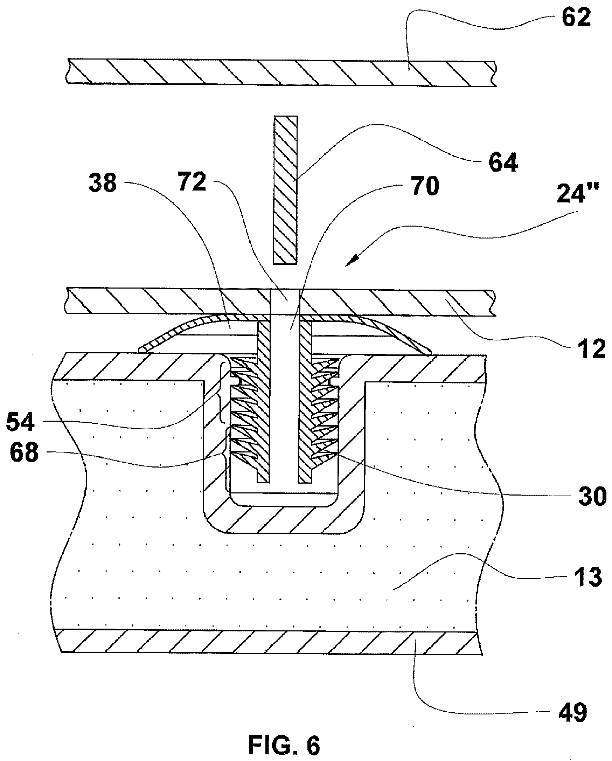

In Fig. 6 ist ein weiteres Ausführungsbeispiel der Befestigungsvorrichtung gezeigt, bei der das Verankerungselement 24" wiederum als Spreizdübel ausgebildet ist (wie in den Fign. 4 und 5), jedoch einteilig mit dem zu befestigenden Fahrzeugbauteil ausgeführt ist (ähnlich wie in den Fign. 1 bis 3 gezeigt). Durch den Umfangsflansch 38 des Verankerungselements 24" erstreckt sich eine Durchgangsöffnung 70, die mit dem Hohlraum im Schaft 30 des Verankerungselements 24" fluchtet. Das zu befestigende Bauteil weist ebenfalls eine Durchgangsöffnung 72 auf, die mit der Durchgangsöffnung 70 fluchtet.

### BEZUGSZEICHENLISTE

- 10: Schallisolationselement
- 13: Schalldämpfungsschicht
- 12: Trägerschicht
- 14: eine Seite der Trägerschicht
- 16: Mulde
- 18: Einstecköffnung der Verankerungsvertiefung
- 20: Einstecköffnung der Positioniervertiefung
- 22: Halteelement
- 24: Verankerungselement
- 24': Verankerungselement
- 24": Verankerungselement
- 26: Positionierelement
- 28: Fahrzeugbauteil
- 30: Schaft des Verankerungselements
- 32: Lamellen
- 34: Ende des Schafts
- 36: Umfangsflansch
- 38: Umfangsrandbereich des Umfangsflansch
- 40: Öffnungsrand
- 42: Schaft des Positionierelements
- 44: Aufnahmeraum des Verankerungselements
- 46: Aufnahmeraum des Positionierelements
- 48: Umfangsinnenseite
- 49: Fahrzeugkarosserie
- 50: Verankerungsvertiefung
- 52: Positioniervertiefung
- 54: Verengungsbereich der Verankerungsvertiefung
- 56: Wulst
- 58: Verankerungsschulter
- 60: Durchgangsöffnung in Kanalwand
- 62: Kanalwand
- 64: Kernstift
- 66: Bodenfläche der Verankerungsvertiefung
- 68: Aufweitungsbereich der Verankerungsvertiefung
- 69: Bodenfläche der Positioniervertiefung
- 70: Durchgangsöffnung im Verankerungselement
- 72: Durchgangsöffnung im Fahrzeugbauteil

## Patentansprüche

1. Vorrichtung zur Befestigung eines Fahrzeugbauteils in und/oder an einem Fahrzeug, mit einem Schallisolationselement (10) wie z.B. einer Stirnwandverkleidung, einer Bodenverkleidung, einer Gepäckraumverkleidung oder einer Motor- oder Aggregate-Kapselung oder einer Radhausverkleidung, wobei das Schallisolationselement (10) eine Kunststoffmaterial aufweisende Trägerschicht (12) mit einer ersten Seite (14) und einer dieser abgewandten zweiten Seite und eine an die zweite Seite der Trägerschicht (12) angeformte Schalldämpfungsschicht (13) aus ebenfalls einem Kunststoffmaterial oder aus Synthetikfaser- oder Naturfasermaterial aufweist, wobei in der Trägerschicht (12) eine Verankerungsvertiefung (50) ausgebildet ist, die in der ersten Seite (14) der Trägerschicht (12) eine Einstecköffnung (18) aufweist, an die sich ein von dem Kunststoffmaterial der Trägerschicht (12) begrenzter Aufnahmeraum (44) anschließt, der durch eine geschlossene Umfangsinnenseite (48) und eine geschlossene Bodenfläche (66) definiert ist, und einem Verankerungselement (24) zur Aufnahme in der Verankerungsvertiefung (50), wobei das Verankerungselement (24, 24', 24") einteilig mit einem an der Trägerschicht (12) des Schallisolationselements (10) zu befestigenden Bauteil ausgeführt ist oder einteilig mit einem Halteelement (22) ausgeführt ist, an dem das an der Trägerschicht (12) des Schallisolationselements (10) zu befestigende Bauteil anbringbar ist, oder durch eine Durchgangsöffnung (70), die in dem an der Trägerschicht (12) des Schallisolationselements (10) zu befestigenden Bauteil ausgebildet ist, hindurch führbar ist, wobei die Verankerungsvertiefung (50) einen an der Umfangsinnenseite (48) ausgebildeten, den Aufnahmeraum (46) zumindest partiell verengenden Verengungsbereich (54) mit einem sich in Richtung auf die Bodenfläche (66) hin anschließenden aufgeweiteten Aufweitungsbereich (68) aufweist und/oder wobei das Verankerungselement (24') eine Verankerungsschulter (58) zum Hintergreifen des Verengungsbereichs (54) bei von der Verankerungsvertiefung (50) aufgenommenem Verankerungselement (24') aufweist.

2. Vorrichtung nach Anspruch 1, **dadurch gekennzeichnet, dass** in der Trägerschicht (12) des Schallisolationselements (10) eine Positioniervertiefung (52) ausgebildet ist, die in der ersten Seite (14) der Trägerschicht (12) eine Einstecköffnung (20) aufweist, an die sich ein von dem Kunststoffmaterial der Trägerschicht (12) begrenzter Aufnahmeraum (44) anschließt, der bevorzugt durch eine geschlossene Umfangsinnenseite (48) und eine geschlossene Bodenfläche (66) definiert ist.

3. Vorrichtung nach wenigstens einem der vorangegangenen Ansprüche, **dadurch gekennzeichnet, dass** ein Positionierelement (26) vorgesehen ist, das einteilig mit dem an der Trägerschicht (12) des Schallisolationselements (10) zu befestigenden Bauteil oder einteilig an einem Halteelement (22) ausgeführt ist, an dem das an der Trägerschicht (12) des Schallisolationselements (10) zu befestigende Bauteil anbringbar ist.

4. Vorrichtung nach dem vorangegangenen Anspruch, **dadurch gekennzeichnet, dass** das Positionierelement (26) und das Verankerungselement (24') bei mit der Positioniervertiefung (52) bzw. der Verankerungsvertiefung (50) fluchtender Ausrichtung in ihre ihnen jeweils zugeordneten Vertiefungen einsteckbar und/oder einsetzbar sind.

5. Vorrichtung nach wenigstens einem der vorangegangenen Ansprüche 3 - 4, **dadurch gekennzeichnet, dass** die Paare aus Verankerungselement (24') und Verankerungsvertiefung (50) und Positionierelement (26) und Positioniervertiefung (52) zur Verhinderung einer Fehlausrichtung des an der Trägerschicht (12) des Schallisolationselements (10) zu befestigenden Bauteils in dessen Befestigungszustand unterschiedlich mechanisch codiert sind.

6. Vorrichtung nach wenigstens einem der vorangegangenen Ansprüche 3 - 5, **dadurch gekennzeichnet, dass** das Verankerungselement (24') und die Verankerungsvertiefung (50) einen untereinander gleichen zylindrischen ersten Querschnitt aufweisen, dass das Positionierelement (26) und die Positioniervertiefung (52) einen untereinander gleichen zylindrischen zweiten Querschnitt aufweisen und dass die Größe des ersten Querschnitts verschieden ist von der Größe des zweiten Querschnitts.

7. Vorrichtung nach wenigstens einem der vorangegangenen Ansprüche, **dadurch gekennzeichnet, dass** das Verankerungselement (24') und die Verankerungsvertiefung (50) eine untereinander gleiche erste Querschnittsfläche aufweisen, dass das Positionierelement (26) und die Positioniervertiefung (52) eine untereinander gleiche zweite Querschnittsfläche aufweisen und dass die zweite Querschnittsfläche verschieden ist von der ersten Querschnittsfläche oder dass die zweite Querschnittsfläche gleich der ersten Querschnittsfläche und verdreht zur zweiten Querschnittsfläche ausgerichtet ist.

8. Vorrichtung nach einem der Ansprüche 1 bis 7, **dadurch gekennzeichnet, dass** die Einstecköffnung der Verankerungsvertiefung (18) einen Öffnungsrand (40) aufweist und dass das Verankerungselement (24") einen Umfangsflansch (28) mit einem Umfangsrandbereich (38) aufweist, der den Rand der Einstecköffnung der Verriegelungsvertiefung (18) überragt und somit die Einstecköffnung der Verriegelungsvertiefung (18) im Zustand des von diesem aufgenommenen Verriegelungselements (24") abdeckt.

9. Vorrichtung nach Anspruch 2 oder einem der vorstehenden Ansprüche, sofern auf Anspruch 2 rückbezogen, **dadurch gekennzeichnet, dass** die Einstecköffnung der Positioniervertiefung (20) einen Öffnungsrand (40) aufweist und dass das Positionierelement (26) einen Umfangsflansch (28) mit einem Umfangsrandbereich (38) aufweist, der den Rand der Einstecköffnung der Positionsvertiefung (20) überragt und somit die Einstecköffnung der Positionsvertiefung (20) im Zustand des von diesem aufgenommenen Positionierelements (26) abdeckt.

10. Vorrichtung nach wenigstens einem der vorangegangenen Ansprüche,
**dadurch gekennzeichnet, dass**
das Verankerungselement an seinem Außenumfang widerhakenähnliche Strukturen aufweist.

11. Vorrichtung nach wenigstens einem der vorangegangenen Ansprüche, **dadurch gekennzeichnet, dass** das Halteelement (22) im Wesentlichen eben ausgebildet ist.

12. Vorrichtung nach wenigstens einem der vorangegangenen Ansprüche,
**dadurch gekennzeichnet, dass**
das Halteelement in einer in der Trägerschicht (12) ausgebildeten Mulde (16) positionierbar ist.

13. Vorrichtung nach dem vorangegangenen Anspruch,
**dadurch gekennzeichnet, dass**
das Halteelement derart in der Mulde positionierbar ist, dass das Halteelement von einem Boden dieser Mulde beabstandet ist.

14. Vorrichtung nach dem vorangegangenen Anspruch,
**dadurch gekennzeichnet, dass**
die Verankerungsvertiefung eine Tiefe aufweist, die derart gewählt ist, dass das Verankerungselement in einem montierten Zustand nicht bis an den Grund der Verankerungsvertiefung reicht.

15. Kraftfahrzeug mit einer Vorrichtung nach wenigstens einem der vorangegangenen Ansprüche.

## Claims

1. An apparatus for fastening a vehicle component in and/or on a vehicle, having a sound insulation element (10) such as a front wall cladding, a floor cladding, a luggage compartment cladding or an engine or aggregate encapsulation or a wheel housing cladding, wherein the sound insulation element (10) comprises a carrier layer (12), which has a plastic material, with a first side (14) and a second side remote therefrom and a sound absorbing layer (13), which is formed on the second side of the carrier layer (12), of likewise a plastic material or of synthetic fibre or natural fibre material, wherein an anchoring recess (50) is formed in the carrier layer (12), which anchoring recess (50) has an insertion opening (18) in the first side (14) of the carrier layer (12), which insertion opening is adjoined by a receiving space (44) delimited by the plastic material of the carrier layer (12), which receiving space is defined by a closed circumferential inner side (48) and a closed bottom surface (66), and an anchoring element (24) for receiving in the anchoring recess (50), wherein the anchoring element (24, 24', 24") is formed in one piece with a component to be fastened to the carrier layer (12) of the sound insulation element (10) or is formed in one piece with a holding element (22) to which the component to be fastened to the carrier layer (12) of the sound insulation element (10) can be attached, or can be guided through a through-opening (70) formed in the component to be fastened to the carrier layer (12) of the sound insulation element (10), wherein the anchoring recess (50) has a narrowing area (54) formed on the circumferential inner side (48), which at least partially narrows the receiving space (46) and has a widened widening area (68) adjoining it in the direction of the bottom surface and/or wherein the anchoring element (24') has an anchoring shoulder (58) for engaging behind the narrowing area (54) when the anchoring element (24') is received by the anchoring recess (50).

2. The apparatus according to claim 1,
**characterized in that**
a positioning recess (52) is formed in the carrier layer (12) of the sound insulation element (10), which positioning recess has an insertion opening (20) in the first side (14) of the carrier layer (12), which insertion opening is adjoined by a receiving space (44) which is delimited by the plastic material of the carrier layer (12) and which receiving space is defined by a closed circumferential inner side (48) and a closed bottom surface (66).

3. The Apparatus according to at least one of the preceding claims,
**characterized in that**
a positioning element (26) is provided, which is constructed in one piece with the component to be fastened to the carrier layer (12) of the sound insulation element (10) or in one piece with a holding element (22), to which the component to be fastened to the carrier layer (12) of the sound insulation element (10) can be attached.

4. The apparatus according to the preceding claim,
**characterized in that**
the positioning element (26) and the anchoring element (24') are plug-gable and/or insertable into their respective assigned recesses with the positioning recess (52) and the anchoring recess (50), respectively.

5. The apparatus according to at least one of the preceding claims 3-4,
**characterized in that**
the pairs of anchoring element (24') and anchoring recess (50) and positioning element (26) and positioning recess (52) are mechanically coded differently for preventing misalignment of the component to be fastened to the carrier layer (12) of the sound insulation element (10) in its fastening state.

6. The apparatus according to at least one of the preceding claims 3-5,
**characterized in that**
the anchoring element (24') and the anchoring recess (50) have a mutually equal cylindrical first cross-section, that the positioning element (26) and the positioning recess (52) have a mutually equal cylindrical second cross-section, and that the size of the first cross-section is different from the size of the second cross-section.

7. The apparatus according to at least one of the preceding claims,
**characterized in that**
the anchoring element (24') and the anchoring recess (50) have a mutually equal first cross-sectional area, that the positioning member (26) and the positioning recess (52) have a mutually equal second cross-sectional area, and that the second cross-sectional area is different from the first cross-sectional area or that the second cross-sectional area is equal to the first cross-sectional area and is oriented in a twisted manner with respect to the second cross-sectional area.

8. The apparatus according to one of claims 1-7,
**characterized in that**
the insertion opening of the anchoring recess (18) has an opening edge (40) and **in that** the anchoring element (24") has a circumferential flange (28) with a circumferential edge region (38) which projects beyond the edge of the insertion opening of the locking recess (18) and thus covers the insertion opening of the locking recess (18) in the state of the locking element (24") received by the latter.

9. The apparatus according to claim 2 or one of the preceding claims as far as referred to claim 2,
**characterized in that**
the insertion opening of the positioning recess (20) has an opening edge (40) and **in that** the positioning element (26) has a circumferential flange (28) with a circumferential edge portion (38) which projects beyond the edge of the insertion opening of the positioning recess (20) and thus covers the insertion opening of the positioning recess (20) in the state of the positioning element (26) received thereby.

10. The apparatus according to at least one of the preceding claims,
**characterized in that**
the anchoring element has barb-like structures on its outer circumference.

11. The apparatus according to at least one of the preceding claims,
**characterized in that**
the holding element (22) is substantially flat.

12. The apparatus according to at least one of the preceding claims,
**characterized in that**
the holding element can be positioned in a trough (16) formed in the carrier layer (12).

13. The apparatus according to the preceding claim,
**characterized in that**
the holding element is positionable in the trough such that the holding element is spaced from a bottom of said trough.

14. The apparatus according to the preceding claim,
**characterized in that**
the anchoring recess has a depth which is chosen such that the anchoring element does not reach the bottom of the anchoring recess in an assembled state.

15. A motor vehicle with an apparatus according to at least one of the preceding claims.

## Revendications

1. Dispositif de fixation d'un composant de véhicule dans et/ou sur un véhicule, avec un élément d'isolation acoustique (10) comme par exemple d'un habillage de paroi frontale, d'un habillage de plancher, d'un habillage de coffre à bagages ou d'un encapsulage de moteur ou de groupe moteur ou d'un habillage de passage de roue, l'élément d'isolation acoustique (10) présentant une couche de support (12) présentant un matériau plastique avec une première face (14) et une deuxième face opposée à celle-ci et une couche d'insonorisation (13) formée sur la deuxième face de la couche de support (12) et constituée également d'un matériau plastique ou d'un matériau en fibres synthétiques ou naturelles, un creux d'ancrage (50) étant formé dans la couche de support (12), lequel présente une ouverture d'insertion (18) dans la première face (14) de la couche de support (12) , à laquelle se raccorde un espace de réception (44) délimité par le matériau synthétique de la couche de support (12), lequel est défini par un côté intérieur périphérique fermé (48) et une surface de fond fermée (66), et un élément d'ancrage (24) destiné à être reçu dans le creux d'ancrage (50), l'élément d'ancrage (24, 24', 24") étant réalisé d'une seule pièce avec un composant à fixer sur la couche de support (12) de l'élément d'isolation acoustique (10) ou étant réalisé d'une seule pièce avec un élément de retenue (22), sur lequel le composant à fixer sur la couche de support (12) de l'élément d'isolation acoustique (10) peut être monté, ou peut être guidé à travers une ouverture de passage (70) qui est formée dans le composant à fixer sur la couche de support (12) de l'élément d'isolation acoustique (10), l'évidement d'ancrage (50) comprenant une zone de rétrécissement (54) formée sur le côté intérieur périphérique (48), qui rétrécie l'espace de réception (46) au moins partiellement avec une zone d'élargissement (68) élargie se raccordant en direction de la surface de fond (66) et/ou l'élément d'ancrage (24') présentant un épaulement d'ancrage (58) pour saisir par l'arrière la zone de rétrécissement (54) lorsque l'élément d'ancrage (24') est reçu par le renfoncement d'ancrage (50).

2. Dispositif selon la revendication 1,
**caractérisé en ce que**
dans la couche de support (12) de l'élément d'isolation acoustique (10) est formé un renfoncement de positionnement (52) qui présente dans la première face (14) de la couche de support (12) une ouverture d'insertion (20) à laquelle se raccorde un espace de réception (44) délimité par la matière plastique de la couche de support (12), qui est défini de préférence par une face intérieure périphérique fermée (48) et une surface de fond fermée (66).

3. Dispositif selon au moins une des revendications précédentes,
**caractérisé en ce que**
un élément de positionnement (26) est prévu, qui est réalisé d'une seule pièce avec le composant à fixer sur la couche de support (12) de l'élément d'isolation acoustique (10) ou d'une seule pièce sur un élément de maintien (22), sur lequel le composant à fixer sur la couche de support (12) de l'élément d'isolation acoustique (10) peut être monté.

4. Dispositif selon la revendication précédente,
**caractérisé en ce que**
l'élément de positionnement (26) et l'élément d'ancrage (24') peuvent être insérés et/ou mis en place dans leurs cavités respectives associées, avec une orientation alignée avec le creux de positionnement (52) ou le creux d'ancrage (50).

5. Dispositif selon au moins l'une des revendications 3 à 4 précédentes, **caractérisé en ce que**
les paires constituées d'un élément d'ancrage (24') et d'un creux d'ancrage (50) et d'un élément de positionnement (26) et d'un creux de positionnement (52) sont codées mécaniquement différemment pour empêcher un défaut d'alignement du composant à fixer sur la couche de support (12) de l'élément d'isolation acoustique (10) dans son état de fixation.

6. Dispositif selon au moins l'une des revendications précédentes 3 à 5,
**caractérisé en ce que**
l'élément d'ancrage (24') et le creux d'ancrage (50) présentent une première section transversale cylindrique identique entre eux, **en ce que** l'élément de positionnement (26) et le creux de positionnement (52) présentent une deuxième section transversale cylindrique identique entre eux et **en ce que** la taille de la première section transversale est différente de la taille de la deuxième section transversale.

7. Dispositif selon au moins l'une des revendications précédentes,
**caractérisé en ce que**
l'élément d'ancrage (24') et le creux d'ancrage (50) présentent une première surface de section transversale identique entre eux, **en ce que** l'élément de positionnement (26) et le creux de positionnement (52) présentent une deuxième surface de section transversale identique entre eux et **en ce que** la deuxième surface de section transversale est différente de la première surface de section transversale ou **en ce que** la deuxième surface de section transversale est égale à la première surface de section transversale et est orientée en torsion par rapport à la deuxième surface de section transversale.

8. Dispositif selon l'une quelconque des revendications 1 à 7,
**caractérisé en ce que**
l'ouverture d'insertion de la cavité d'ancrage (18) présente un bord d'ouverture (40) et **en ce que** l'élément d'ancrage (24") présente une bride périphérique (28) avec une zone de bord périphérique (38) qui dépasse le bord de l'ouverture d'insertion de la cavité de verrouillage (18) et recouvre ainsi l'ouverture d'insertion de la cavité de verrouillage (18) dans l'état de l'élément de verrouillage (24") reçu par celle-ci.

9. Dispositif selon la revendication 2 ou l'une quelconque des revendications précédentes, dans la mesure elle réfère à la revendication 2,
**caractérisé en ce que**
l'ouverture d'insertion du creux de positionnement (20) présente un bord d'ouverture (40) et **en ce que** l'élément de positionnement (26) présente une bride périphérique (28) avec une zone de bord périphérique (38) qui dépasse le bord de l'ouverture d'insertion du creux de positionnement (20) et recouvre ainsi l'ouverture d'insertion du creux de positionnement (20) dans l'état de l'élément de positionnement (26) reçu par celui-ci.

10. Dispositif selon au moins l'une des revendications précédentes,
**caractérisé en ce que**
l'élément d'ancrage présente sur sa périphérie extérieure des structures semblables à des barbillons.

11. Dispositif selon au moins l'une des revendications précédentes,
**caractérisé en ce que**
l'élément de retenue (22) est sensiblement plat.

12. Dispositif selon au moins l'une des revendications précédentes,
**caractérisé en ce que**
l'élément de retenue peut être positionné dans une cavité (16) formée dans la couche de support (12).

13. Dispositif selon la revendication précédente,
**caractérisé en ce que**
l'élément de retenue peut être positionné dans la cavité de telle sorte que l'élément de retenue est espacé d'un fond de cette cavité.

14. Dispositif selon la revendication précédente,
**caractérisé en ce que**
la cavité d'ancrage présente une profondeur choisie de telle sorte que l'élément d'ancrage n'atteigne pas le fond de la cavité d'ancrage dans un état monté.

15. Véhicule automobile équipé d'un dispositif selon au moins l'une des revendications précédentes.
